# EUROPEAN PATENT APPLICATION

(11) **EP 3 330 182 A1**
(43) Date of publication of application: **06.06.2018**
(21) Application number: 17204107.1
(22) Date of filing: 28.11.2017
(51) Int. Cl.: B64D 33/04

(54) **LOW INFRARED SIGNATURE EXHAUST THROUGH ACTIVE FILM COOLING, ACTIVE MIXING AND ACTIVE VANE ROTATION**

(30) Priority: 30.11.2016 US 201615365434
(71) Applicant: Sikorsky Aircraft Corporation, Stratford, CT 06615 (US)
(72) Inventor: Pantalone, III, Joseph, Guilford, CT 06437 (US); Chapkovich, III, John S., Derby, CT 06418 (US)
(74) Representative: Schmitt-Nilson Schraud Waibel Wohlfrom Patentanwälte Partnerschaft mbB

(57) **Abstract**

An exhaust infrared signature reduction arrangement includes an exhaust duct, a first vane support disposed within the exhaust duct and a second vane support disposed within the exhaust duct downstream from the first vane support. The first vane support and the second vane support are movable between a first configuration and a second configuration.

## Description

Exemplary embodiments of the invention relate to rotary-wing aircraft and, more particularly, to an exhaust system for reducing infrared energy from the engine exhaust of rotary wing aircraft.

The exhaust ducting from a gas turbine engine of a rotary wing aircraft is a source of infrared (IR) energy which may be detected by heat seeking missiles and/or various forms of infrared imaging systems for targeting/tracking purposes. With respect to the former, generally speaking, a heat-seeking missile obtains directional cues from the infrared energy generated by the engine exhaust such that the amount of infrared energy given off is one of the primary determining factors of missile accuracy. Regarding the latter, infrared imaging systems detect and amplify the infrared energy for detection and/or targeting.

Current IR suppression systems are utilized on many rotary wing aircraft to provide IR signature reduction. Generally, IR suppression systems are designed to; reduce the infrared energy below a threshold level of a perceived threat, maintain engine performance, and reduce weight and packaging associated therewith. Other consequences may include reducing system or configuration complexity to reduce fabrication and maintainability costs and reducing the external aerodynamic drag produced by such IR suppressor systems.

According to one embodiment of the invention, an exhaust infrared signature reduction arrangement includes an exhaust duct, a first vane support disposed within the exhaust duct and a second vane support disposed within the exhaust duct downstream from the first vane support. The first vane support and the second vane support are movable between a first configuration and a second configuration.

In addition to one or more of the features described above, or as an alternative, in further embodiments the first vane support and the second vane support are substantially identical.

In addition to one or more of the features described above, or as an alternative, in further embodiments the first vane support includes a first plurality of turning vanes and the second vane support includes a second plurality of turning vanes.

In addition to one or more of the features described above, or as an alternative, in further embodiments when the first vane support and the second vane support are in the first configuration, the first plurality of turning vanes and the second plurality of turning vanes are substantially aligned.

In addition to one or more of the features described above, or as an alternative, in further embodiments in the first configuration an engine exhaust and air mixture are configured to flow linearly through the first vane support and the second vane support.

In addition to one or more of the features described above, or as an alternative, in further embodiments when the first vane support and the second vane support are in the second configuration, the first plurality of turning vanes are staggered relative to the second plurality of turning vanes.

In addition to one or more of the features described above, or as an alternative, in further embodiments in the second configuration, a line of sight through the first vane support and the second vane support is blocked.

In addition to one or more of the features described above, or as an alternative, in further embodiments the exhaust duct includes a plurality of holes formed through a wall of the exhaust duct.

In addition to one or more of the features described above, or as an alternative, in further embodiments comprising a mechanism for selectively controlling a supply of air to the exhaust duct.

In addition to one or more of the features described above, or as an alternative, in further embodiments the mechanism is a fan.

In addition to one or more of the features described above, or as an alternative, in further embodiments the mechanism is operable to actively cool the exhaust duct.

According to another embodiment, an exhaust infrared signature reduction arrangement includes an exhaust duct and a mechanism associated with the exhaust duct operable to control an amount of cooling within the exhaust duct.

In addition to one or more of the features described above, or as an alternative, in further embodiments the cooling generated by the mechanism is directly dependent on an amount of power supplied to the mechanism.

In addition to one or more of the features described above, or as an alternative, in further embodiments in the absence of power being provided to the mechanism, the exhaust duct is passively cooled.

In addition to one or more of the features described above, or as an alternative, in further embodiments the exhaust duct is passively cooled through air inlets.

In addition to one or more of the features described above, or as an alternative, in further embodiments when power is provided to the mechanism, the exhaust duct is actively cooled.

The subject matter, which is regarded as the invention, is particularly pointed out and distinctly claimed in the claims at the conclusion of the specification. The foregoing and other features, and advantages of the invention are apparent from the following detailed description taken in conjunction with the accompanying drawings in which:
FIG. 1 is a perspective view of an example of a rotary wing aircraft;
FIG. 2 is a schematic diagram of an exhaust system associated with an engine of a rotary wing aircraft according to an embodiment;
FIG. 3 is a perspective view of an engine outlet according to an embodiment;
FIG. 4 is a perspective view of an exhaust duct of an exhaust system according to an embodiment;
FIGS. 5a and 5b are front views of the vane supports of the exhaust system according to an embodiment;
FIG. 6 is a perspective view of an interior of an exhaust duct of an exhaust system according to an embodiment; and
FIG. 7 is a schematic diagram of an exhaust system associated with an engine of a rotary wing aircraft according to an embodiment;

The detailed description explains embodiments of the invention, together with advantages and features, by way of example with reference to the drawings.

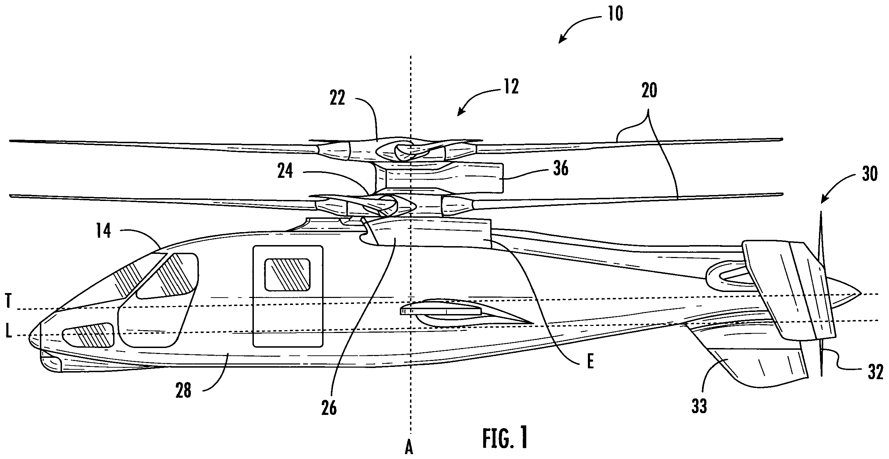

FIG. 1 illustrates an exemplary vertical takeoff and landing (VTOL) rotary-wing aircraft 10 having a dual, counter-rotating, coaxial rotor system 12 which rotates about an axis of rotation A. The aircraft 10 includes an airframe 14 which supports the dual, counter rotating, coaxial rotor system 12 as well as an optional translational thrust system 30 which provides translational thrust generally parallel to an aircraft longitudinal axis, L. Although a particular aircraft configuration is illustrated in this non-limiting embodiment, other rotary-wing aircraft will also benefit from embodiments of the invention.

The dual, counter-rotating, coaxial rotor system 12 includes an upper rotor system and a lower rotor system. Rotor system 12 includes a plurality of rotor blades 20 mounted to a rotor hub 22, 24 for rotation about rotor axis of rotation A. A plurality of the main rotor blades 20 project substantially radially outward from the hubs 22, 24. Any number of blades 20 may be used with the rotor system 12. The rotor system 12 includes a rotor hub fairing 36 generally located between and around the upper and lower rotor systems such that the rotor hubs 22, 24 are at least partially contained therein. The rotor hub fairing 36 provides drag reduction.

A main gearbox 26 may be located above the aircraft cabin 28 and drives the rotor system 12. The translational thrust system 30 may be driven by the same main gearbox 26 which drives the rotor system 12. The main gearbox 26 is driven by one or more engines (illustrated schematically at E).

The translational thrust system 30 may be mounted to the rear of the airframe 14 with a translational thrust axis, T, oriented substantially horizontal and parallel to the aircraft longitudinal axis L to provide thrust for high-speed flight. The translational thrust system 30 includes a pusher propeller 32 mounted at an aerodynamic tail fairing 33. The translational thrust axis, T, corresponds to the axis of rotation of propeller 32. Although a tail mounted translational thrust system 30 is disclosed in this illustrated non-limiting embodiment, it should be understood that any such system or other translational thrust systems may alternatively or additionally be utilized.

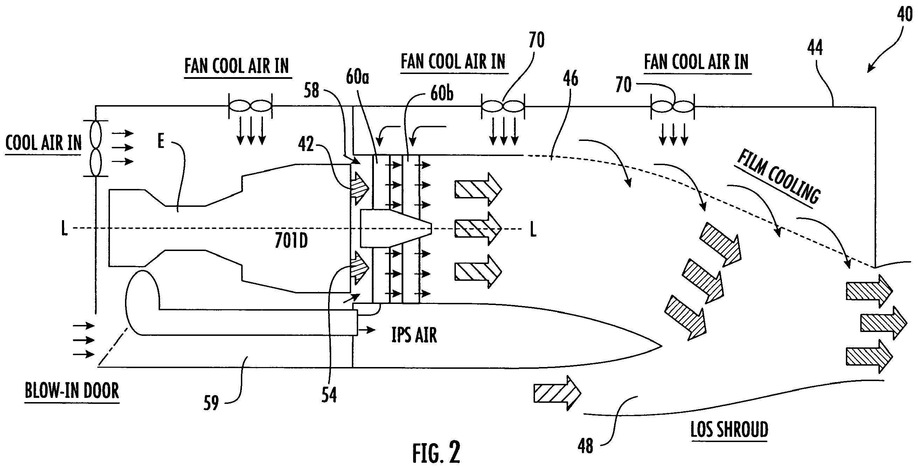

Referring to FIG. 2, the rotary wing aircraft 10 includes an exhaust system 40 for cooling an engine exhaust flow 42 from an engine E and directing the exhaust flow 42 away from the structure of the rotary wing aircraft 10. The exhaust flow 42 has a high temperature and may produce an infrared signature that may allow for acquisition and tracking by heat seeking, hostile forces if line of sight to the exhaust flow is achieved by the hostile forces. To prevent such acquisition, the exhaust system 40 includes one or more suppression mechanisms that may be selectively operated when desired, for example, when the rotary wing aircraft 10 is located within a hostile zone or hostile airspace.

The exhaust system 40 is disposed in communication with each gas turbine engine E of the aircraft 10. The exhaust system 40 is configured to suppress the IR signature radiating from the high-temperature exhaust generated by the gas turbine engines E. In the context used herein, "suppress"" means that the IR signature emanating from the gas turbine engine E after passage through the exhaust system 40 is less than the IR signature of the exhaust gas expelled from the gas turbine engine E.

With reference now to FIGS. 2-6, the exhaust system 40 is located generally adjacent and downstream from the engine E and includes an exhaust manifold 44 and an exhaust duct 46 extending along the longitudinal length of the exhaust manifold 44. One or more supplies of cooling air are configured to mix with the engine exhaust 42 within the exhaust duct 46 prior to being dispelled from the aircraft 10. In the illustrated, non-limiting embodiment, the exhaust duct 46 extends at least partially transverse to the longitudinal axis L defined by the engine. The exhaust duct 46 may additionally include a line of sight shroud 48 configured to provide an additional supply of air to the interior of the exhaust duct 46 to mix with and cool the engine exhaust 42.

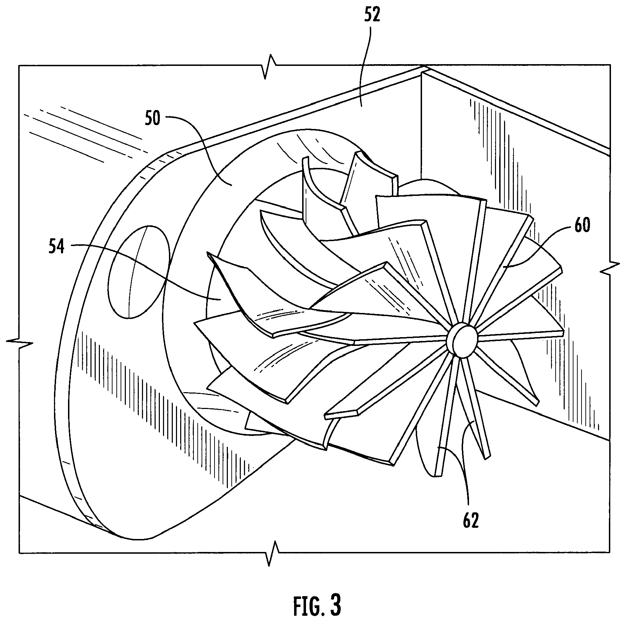

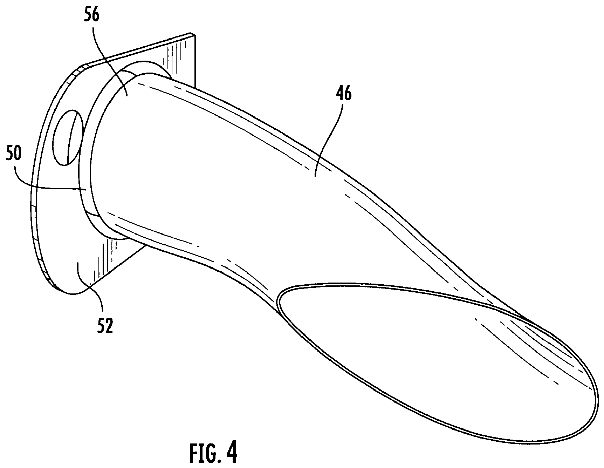

As best shown in FIG. 3, a de-swirling duct 50 may extend from a firewall 52 disposed adjacent the engine outlet 54 in a direction generally parallel to the longitudinal axis of the engine. The exhaust dust 46 may be configured to couple to the firewall 52, or alternatively, to the de-swirling duct 50. In an embodiment, an outer diameter of the exhaust duct 46 may be less than an inner diameter of the de-swirling duct 50 such that inlet end 56 of the exhaust duct 46 is disposed within the de-swirling duct 50. In another embodiment, however, the inlet end 56 of the exhaust duct 46 may circumscribe the outer periphery of the de-swirling duct 50. as shown in FIG. 4.

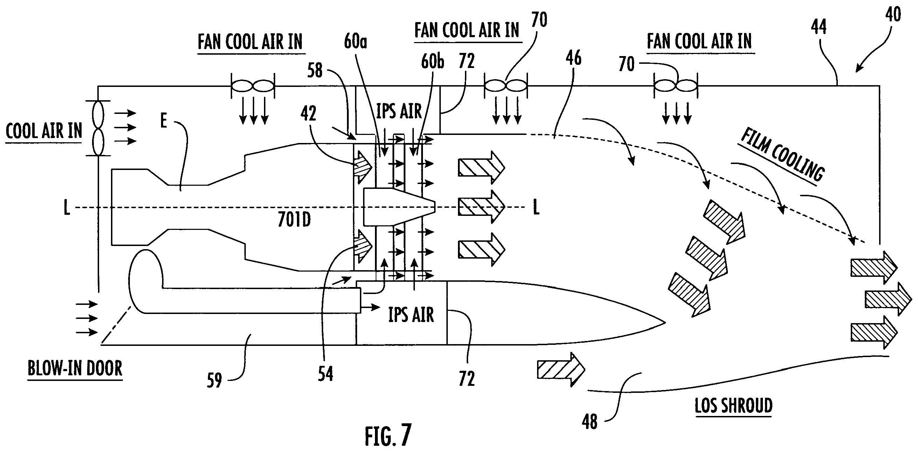

Immediately adjacent the engine outlet 54, the engine exhaust 42 is configured to mix with cooling air, identified as 58 in FIG. 2, provided from the engine bay 59. One or more vane supports 60 may be positioned within the channel defined by the exhaust duct 46. for example near the engine outlet 54. In an embodiment, the cooling air 58 is configured to flow through the vane supports 60 and mix with the engine exhaust 42. In another embodiment, illustrated in FIG. 7, the cooling air is configured to bypass the at least one vane support 60, and is provided directly into the exhaust duct 46, where it can then mix with the engine exhaust 46. The one or more vane supports 60 are fixedly mounted, such as at a position generally aligned with the longitudinal axis L of the engine E. Each vane support 60 includes a plurality of turning vanes 62 configured to deflect engine exhaust 42 and/or cooling air as it passes there through. In the illustrated, non-limiting embodiment, a first vane support 60a and a second vane support 60b are positioned within the exhaust duct 46. The first vane support 60a and the second vane support 60b may, but need not have substantially identical configurations, i.e. inner diameter, outer diameter, number and construction of turning vanes.

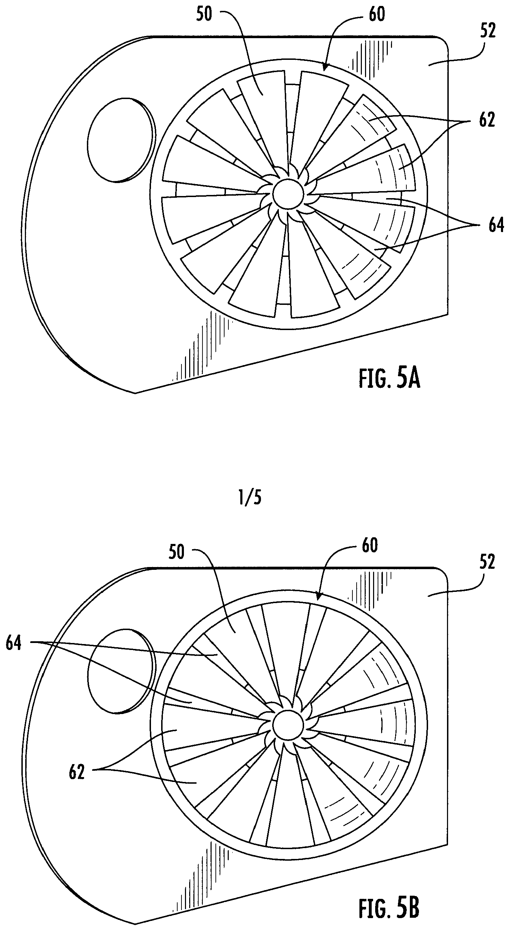

The position of the first vane support 60a relative to the second vane support 60b may be controlled in response to a selected mode of operation. In an embodiment, when a first mode is selected, as shown in FIG. 5a, the first vane support 60a and the second vane support 60b may be oriented such that a turning vane 62 of the first vane support 60a is substantially aligned with a corresponding turning vane 62 of the second vane support 60b. When the first and second vane supports 60a, 60b are aligned, the openings 64 defined between the turning vanes 62 of the first vane support 60a and the openings 64 defined between the turning vanes 62 of the second vane support 60b form a generally linear flow path through the vane supports. Therefore, when the exhaust system 40 is operated in the first mode and the vane supports 60a, 60b are aligned, the losses through the exhaust system 40 are reduced.

In a second mode of operation, illustrated in FIG. 5b, the turning vanes 62 of the first vane support 60a are skewed or staggered relative to the turning vanes 62 of the second vane support 60b. In an embodiment, the first vane support 60a and the second vane support 60b are rotated by about a half period. This relative rotation impedes the flow through the vane supports 60a, 60b and provides complete blockage of the line of sight of the engine exhaust at the engine outlet 54. As a result, operation of the exhaust system 40 in the second mode is typically selected when a reduction in the infrared signature of the engine exhaust 42 is necessary.

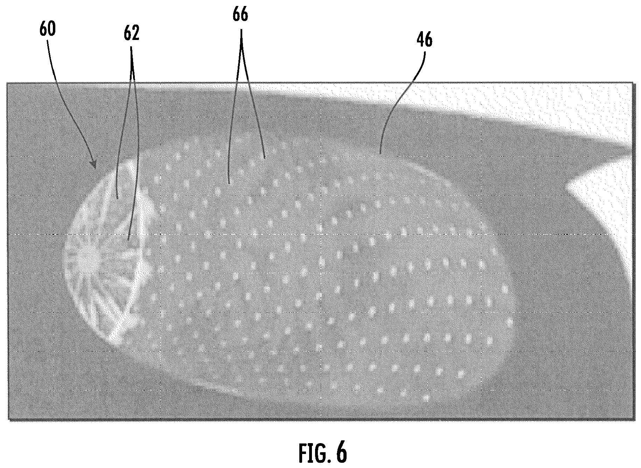

With reference to FIG. 6, the exhaust duct 46 may include a plurality of openings 66 formed therein. The plurality of openings 66 may extend over all or only a portion of the length of the duct 46. The plurality of openings 66 may be substantially uniform in size and shape, or alternatively may vary. In an embodiment, the size and positioning of the plurality of openings 66 is selected based on the pressure distribution and the anticipated temperature of the exhaust-air mixture at various positions within the duct 46. The openings 66 may be formed in rows that extend parallel to the axis defined by the duct 46 or may be formed in rows that rotate about the axis of the duct 46, for example in a spiral-like configuration.

One or more mechanisms 70 may be configured to provide a supply of air into the exhaust duct 46 for reducing the temperature of the engine exhaust 42. In an embodiment, as illustrated in FIG. 2, the mechanisms 70 are fans driven by a power source located on the aircraft. However, in other embodiments, the mechanisms 70 may be air scoops or a pressurized air source for example. The fans 70 are disposed in the exhaust manifold 44 such that they direct cool, ambient air towards the engine exhaust mixture. As shown, a first fan 70 is positioned downstream from the inlet end 56 of the exhaust duct 46 and a second fan 70 is positioned downstream from a halfway point of the exhaust duct 46. However, it should be understood, that embodiments having only a single mechanism or more than two mechanisms 70 are also contemplated herein. In the non-limiting embodiment of FIG. 2, the first fan 70 is positioned to supply air to and actively cool the one or more vane supports 60. In another embodiment, illustrated in FIG. 7, a plenum wall 72 extends between the exhaust duct 46 and the exhaust manifold 44 to direct the flow from the mechanisms 70 directly into the exhaust duct 46, downstream of the one or more vane supports 60. In such embodiments, air from another system of the aircraft 10, such as air provided from an inlet particle separator is used to actively cool the vane supports 60.

The fans 70 may be operated to control the cooling of the exhaust duct 46. Further, the active cooling of the exhaust duct that occurs in response to the fans is dependent on the amount of power provided to the fans 70. In embodiments where no power is applied to the fans 70, all film cooling of the exhaust duct 46 that occurs is passive and results from the movement of air through the duct 46. When power is supplied to the fans 70, forced air is applied to the exhaust duct 46 at a position generally adjacent each of the fans 70 to actively cool the exhaust duct. Accordingly, the amount of cooling necessary to reduce the IR signature of the exhaust flow must be balanced with the amount of power available for use by the fans 70 in a given scenario or application.

The exhaust system illustrated and described herein allows an operator of the aircraft to balance achieving a lower infrared signature with losses in efficiency without a substantial weight increase to the aircraft.

While the invention has been described in detail in connection with only a limited number of embodiments, it should be readily understood that the invention is not limited to such disclosed embodiments. Rather, the invention can be modified to incorporate any number of variations, alterations, substitutions or equivalent arrangements not heretofore described, but which are commensurate with the and scope of the claims. Additionally, while various embodiments of the invention have been described, it is to be understood that aspects of the invention may include only some of the described embodiments. Accordingly, the invention is not to be seen as limited by the foregoing description, but is only limited by the scope of the appended claims.

## Claims

1. An exhaust infrared signature reduction arrangement, comprising:
an exhaust duct;
a first vane support disposed within the exhaust duct; and
a second vane support disposed within the exhaust duct downstream from the first vane support, the first vane support and the second vane support being movable between a first configuration and a second configuration.

2. The exhaust infrared signature reduction arrangement according to claim 1, wherein the first vane support and the second vane support are substantially identical.

3. The exhaust infrared signature reduction arrangement according to claim 1 or 2, wherein the first vane support includes a first plurality of turning vanes and the second vane support includes a second plurality of turning vanes.

4. The exhaust infrared signature reduction arrangement according to claim 3, when the first vane support and the second vane support are in the first configuration, the first plurality of turning vanes and the second plurality of turning vanes are substantially aligned.

5. The exhaust infrared signature reduction arrangement according to one of claims 1-4, wherein in the first configuration an engine exhaust and air mixture are configured to flow linearly through the first vane support and the second vane support.

6. The exhaust infrared signature reduction arrangement according to one of claims 3-5, when the first vane support and the second vane support are in the second configuration, the first plurality of turning vanes are staggered relative to the second plurality of turning vanes.

7. The exhaust infrared signature reduction arrangement according to one of claims 1-6, wherein in the second configuration, a line of sight through the first vane support and the second vane support is blocked.

8. The exhaust infrared signature reduction arrangement according to one of claims 1-7, wherein the exhaust duct includes a plurality of holes formed through a wall of the exhaust duct.

9. the exhaust infrared signature reduction arrangement according to one of claims 1-8, further comprising a mechanism for selectively controlling a supply of air to the exhaust duct.

10. The exhaust infrared signature reduction arrangement according to claim 9, wherein the mechanism is a fan.

11. The exhaust infrared signature reduction arrangement according to claim 9 or 10, wherein the mechanism is operable to actively cool the exhaust duct.

12. An exhaust infrared signature reduction arrangement, comprising:
an exhaust duct;
a mechanism associated with the exhaust duct, the mechanism being operable to control an amount of cooling within the exhaust duct.

13. The exhaust infrared signature reduction arrangement according to claim 12, wherein the cooling generated by the mechanism is directly dependent on an amount of power supplied to the mechanism.

14. The exhaust infrared signature reduction arrangement according to claim 12 or 13, wherein in the absence of power being provided to the mechanism, the exhaust duct is passively cooled, or wherein when power is provided to the mechanism, the exhaust duct is actively cooled.

15. The exhaust infrared signature reduction arrangement according to one of claims 12-14, wherein the exhaust duct is passively cooled through air inlets.
